# EUROPEAN PATENT SPECIFICATION

(11) **EP 3 697 518 B1**
(45) Date of publication and mention of the grant of the patent: **16.08.2023**
(21) Application number: 18797113.0
(22) Date of filing: 11.10.2018
(51) Int. Cl.: B01D 35/147, B01D 36/00, B01D 29/15

(54) **AUTOMATIC AIR VENT AND SAFETY VALVE INTEGRATED IN THE CARTRIDGE**
IN DIE KARTUSCHE INTEGRIERTES AUTOMATISCHES ENTLÜFTUNGSVENTIL UND SICHERHEITSVENTIL
ÉVENT D'AIR AUTOMATIQUE ET SOUPAPE DE SÉCURITÉ INTÉGRÉE DANS LA CARTOUCHE

(30) Priority: 16.10.2017 US 201762572687 P
(43) Date of publication of application: 26.08.2020
(73) Proprietor: Cummins Filtration SARL, 29000 Guelen (FR)
(72) Inventor: MALGORN, Gerard, 29500 Ergue Gaberic (FR)
(74) Representative: Roberts, Peter David
(86) International application number: PCT/IB2018/057901
(87) International publication number: WO 2019/077450

(56) References cited:
- WO-A1-2014/172145
- WO-A2-2009/132291
- US-A1- 2006 053 756
- US-A1- 2010 276 358

## Description

### TECHNICAL FIELD

This disclosure relates to filter elements for use in filtering fluids such as fuel.

### BACKGROUND

For heavy-duty diesel engines where achieving maximum fuel pressure is desired, any trapped air within large fuel housings can pose a problem. Air can become trapped within the fuel housing in a number of ways, including as a result of a new filter element being installed in the housing and air entrained in fuel entering the fuel filter housing.

Manual external or internal air-bleed valves have been developed to purge air outside of the filter housing. Various automatic air bleeding fuel filter designs are also known. The use of external air-bleed valves can present additional possibilities of functional failure where fuel-leaks could occur. Moreover, to manually bleed air out, some amount of fuel can spill out of the housing, posing safety risks to the operator. The same safety risks apply to draining the fuel manually out of the housing during filter replacement.

US2006/0053756A1 discloses a filter system including a filter configured to regulate fuel pressure as well as automatically vent air from the filter. A pressure regulator valve is positioned in the top of a standpipe of the filter. The filter includes a filter cartridge with top and bottom end caps. The top end cap of the filter cartridge has a hole with radial sealing gasket, which seals against the top of the standpipe to prohibit flow from bypassing the filter cartridge. This arrangement exposes the regulator valve to the fuel and/or air at the top of the filter housing. Pressure in the housing opens the valve, allowing air and/or fuel to be vented through the standpipe, and back to the fuel tank.

WO2009/132291A2 discloses a top load liquid filter assembly including a filter lockout mechanism to ensure that the filter base and cover are not connectable unless there is a proper filter cartridge installed therein. The filter system can also include an automatic drain mechanism and a cartridge retention mechanism. One example embodiment further includes an air bleed vent. A filter cartridge usable in the topload liquid filter assembly includes first and second protrusions and cover-gripper members. Methods of use, installing, servicing, and retaining can be practiced.

### SUMMARY

One embodiment relates to a filter assembly according to claim 1. The filter assembly includes a housing define an outer cavity and an inner cavity, a filter element positioned within the housing, and a valve body. The filter element includes a filter media and an endcap and is configured to filter a fluid. The endcap includes a valve seat. The valve body includes a vent passage, where at least a portion of the valve body positioned within a central tube. The valve body is configured to move between a closed position and an open position and is biased toward the closed position by a return member. In the closed position, the valve body is configured to seal against the valve seat and the vent passage provides fluid communication between the inner cavity and the outer cavity.

Another embodiment relates to a filter element for positioning in a filter housing according to claim 11. The filter element includes a filter media configured to filter a fluid, an endcap comprising a valve seat, and a valve body movable between an open position and a closed position. The valve body is biased toward the closed position by a return member. In the closed position, the valve body is configured to seal against the valve seat and in the open position, a fluid can pass between the valve body and the valve seat.

These and other features, together with the organization and manner of operation thereof, will become apparent from the following detailed description when taken in conjunction with the accompanying drawings, wherein like elements have like numerals throughout the several drawings described below.

### BRIEF DESCRIPTION OF THE FIGURES

FIG. 1 shows a cross-sectional view of a portion of a filter assembly according to an exemplary embodiment.
FIG. 2 shows a perspective view of a valve body of the filter assembly according to an exemplary embodiment.
FIG. 3 shows a cross-sectional view of a portion of a filter element of the filter assembly with a valve body in an open position.
FIG. 4 shows a cross-section view of the portion of the filter element of FIG. 3 with the valve body in a closed position.

### DETAILED DESCRIPTION

Referring to the figures generally, a filtration system is shown. The filtration system includes a filter housing having a central tube (e.g., a standpipe) and a replaceable filter element. The filtration system includes a valve system including a valve body, a valve seat, and a return member. The valve body moves between a closed position, where the valve body is sealed against the valve seat, and an open position, where the valve body is unseated from the valve seat. To move from the closed position to the open position, the valve body is acted upon by pressure from within the housing, releasing the valve body from the valve seat and allowing fluid to flow past the valve body (e.g., from the housing toward a return line to a fuel tank). The valve body includes a vent passage extending through the valve body allowing fluid from the housing to be purged therethrough, thereby fluidly coupling the cavity of the filter housing with a return line through the central tube, which is connected to a fuel tank. Allowing purging of fluid (e.g., air) in this way reduces the amount of lingering air pockets within the housing cavity.

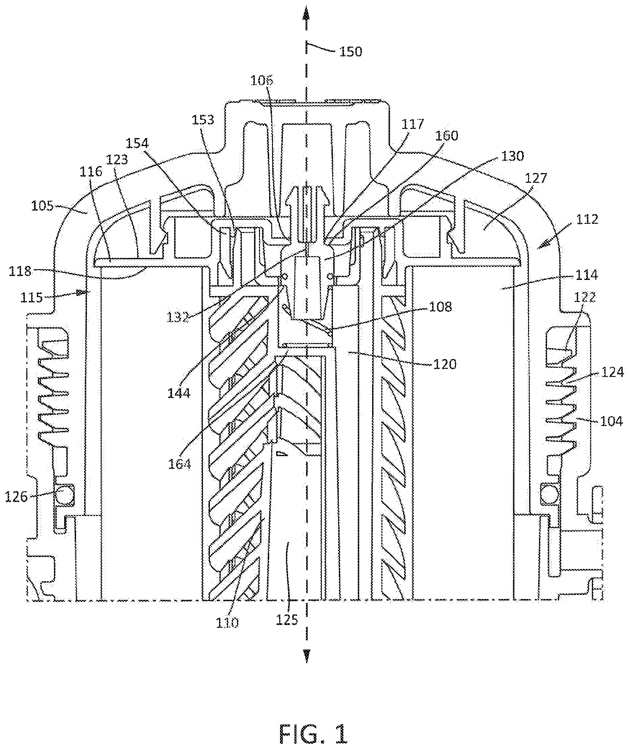

Referring to FIG. 1, a cross-sectional view of a portion of a filter assembly 100 is shown. The filter assembly 100 includes a filter housing 102 including a vessel 104 and a cover 105. The filter housing 102 defines a substantially cylindrical cavity 115. A central tube 110 (e.g., a standpipe mounted on a filter head of an engine) is received within the cavity 115. The central tube 110 includes a return line 120 connected to a fuel tank, which allows the flow of fluid from the filter housing 102 back to the fuel tank. A cylindrical filter element 112 is removably received in the cavity 115 and over the central tube 110. The filter element 112 includes a filter media 114 arranged in a cylindrical manner and positioned between a first endcap 116 and a second endcap (not shown). The filter media 114 extends longitudinally along a longitudinal axis 150 between the first endcap 116 and the second endcap.

The vessel 104 includes an internal thread 122 and the cover 105 includes an external thread 124 that can be screwed onto the internal thread 122 of the vessel 104 so as to close the filter assembly 100. A sealing member 126 is provided between the vessel 104 and cover 105 to provide sealing of the filter assembly 100. The cover 105 can be unscrewed from the vessel 104 to extract the filter element 112 and replace the filter element 112 with a new filter element

The central tube 110 extends upwardly into the interior of the filter housing 102. The central tube 110 includes a return line 120 configured to allow fluid communication between the cavity 115 of the filter housing 102 and a fuel tank (not shown) or other fuel storage location through which air and/or fuel mixed with air is returned to the fuel tank after being vented from the fuel filter. Fuel can also drain through the return line 120 back to the fuel tank when the filter element 112 is lifted upward so that the fuel filter assembly 100 can auto-drain during filter element changes.

The first endcap 116 is attached to a first end 118 of the filter media 114 using any suitable attachment method, for example using an adhesive or embedding or potting the first end 118 into the first endcap 116, which can be made of plastic or metal. The first endcap 116 is a closed endcap that seals the dirty side of the filter media 114 (the side of the filter media 114 facing the housing wall) from the clean side of the filter media 114 (the side of the filter media 114 facing the central tube 110).

A sealing feature 154 is included on the underside of the first endcap 116 to seal the dirty side of the filter media 114 from the clean side. The sealing feature 154 comprises a cylindrical gasket fitted between a tab 153, the underside of the first endcap 116, and an outer surface of the central tube 110. The first endcap 116 additionally includes an aperture 106, which is sealed and unsealed by a valve system (e.g., valve body 130, valve seat 117), described further herein. The second endcap is an open endcap such that the filter element 112 can be received over the central tube 110.

As shown in FIG. 1, the cavity 115 is divided by the first endcap 116 and the valve system into an inner cavity 125 and an outer cavity 127. The inner cavity 125 is defined by the underside of the first endcap 116, the underside of the valve body 130, and the inner surface of the central tube 110. The outer cavity 127 is defined by the top surface 123 of the first endcap 116 and the inner wall of the filter housing 102. As described further herein, the valve body 130 translates along the longitudinal axis 150 between an open position, in which the inner cavity 125 and outer cavity 127 are in fluid communication, and a closed position in which the inner cavity 125 is sealed from the outer cavity 127. The valve body 130 includes a vent passage 132 extending therethrough configured to permit the venting of fluid from the outer cavity 127 to the inner cavity 125 (e.g., toward return line 120).

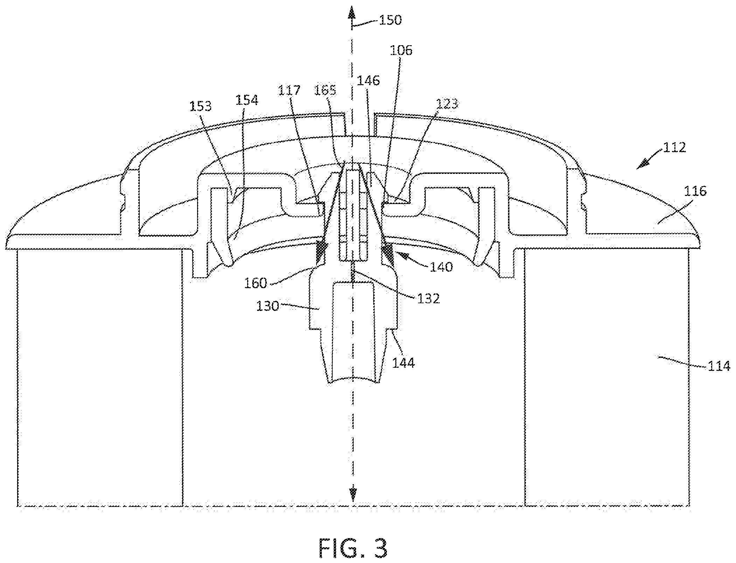

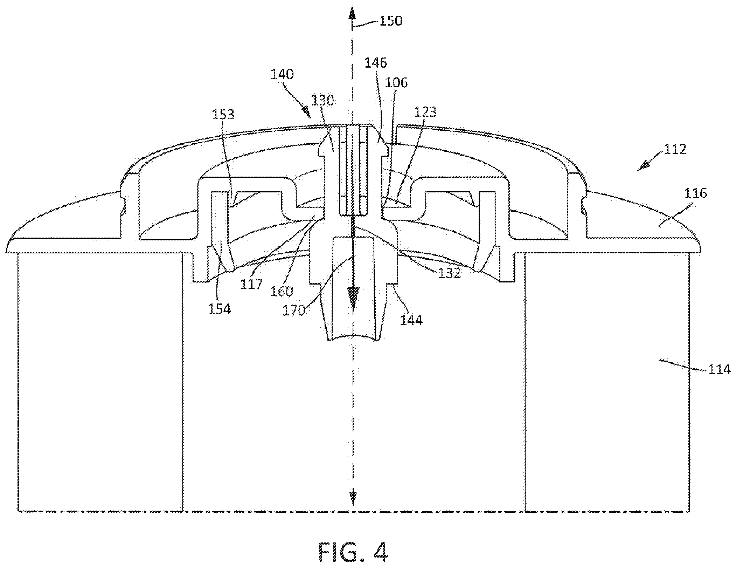

The first endcap 116 includes a valve seat 117 with which a valve body 130 interfaces. The valve body 130 is configured to move between two positions, namely a closed position (shown in FIGS. 1 and 4), in which the valve body 130 closes off the valve seat 117 and an open position (shown in FIG. 3), in which the valve body 130 enables the passage of fluid past the valve seat 117 and through the aperture 106 formed in the first endcap 116. The valve seat 117 is defined by an inner rim which defines the aperture 106. At least a portion of the valve body 130 is retained within the aperture 106 of the first endcap 116 and at least a portion of the valve body 130 is positioned within the central tube 110. The valve body 130 moves between the open and closed positions by translating along the longitudinal axis 150. The valve body 130 is a component of the filter element 112 such that the valve body 130 is replaced alongside the filter element 112. In other embodiments, the valve body 130 is separate and distinct from the filter element 112 (e.g., part of the central tube 110 or standpipe) such that when a filter element 112 is removed and replaced in the filter housing 102, the valve body 130 may be removed from the filter element 112 and used with a new filter element.

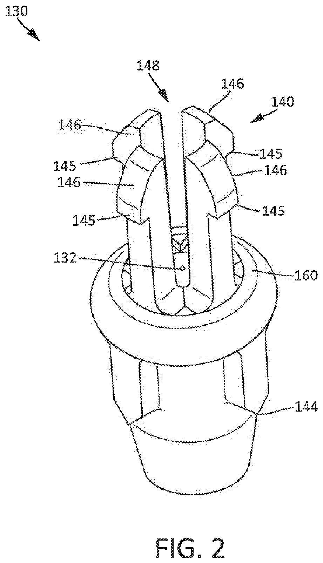

Referring to FIG. 2, the valve body 130 is shown. The valve body 130 includes an upper portion including one or more protruding elements 140 extending from the valve body 130 away from the filter element 112. Each of the one or more protruding elements 140 having one or more tabs 146 extending radially outwards from an end of the corresponding protruding element 140 located distal from the filter element 112, and a lower portion configured to interface with a return member 108 (FIG. 1), described further herein. The valve body 130 includes a seating surface 160. The seating surface 160 extends around the base of the protruding elements 140 and provides a circular seating surface engageable with the valve seat 117 in a closed position of the valve body 130. As such, the seating surface 160 is shaped to sealingly fit with the valve seat 117. In the example shown in FIG. 2, the seating surface 160 slopes downward as the seating surface 160 extends toward the outer perimeter of the valve body 130. This shape corresponds to the shape of the valve seat 117 such that the two components can sealingly engage. Accordingly, in a closed position (shown in FIGS. 1 and 4), the seating surface 160 of the valve body 130 sealingly engages the valve seat 117. in a fully open position (as shown in FIG. 3), the underside 145 of each tab 146 abuts the top surface 123 of the first endcap 116 to limit the movement of the valve body 130.

The valve body 130 additionally includes a support surface 144 forming a shoulder substantially perpendicular to the longitudinal axis 150 and extending circumferentially around the outer surface of the valve body 130. The support surface 144 provides a contact surface between the valve body 130 and an upper end of the return member 108.

The filter assembly 100 further includes the return member 108, shown as a spring in FIG. 1, configured to bias the valve body 130 into the closed position (e.g., in an upward position, against the valve seat 117). The return member 108 is supported by a retaining feature 164 positioned within an upper portion of the central tube 110. The retaining feature 164 is formed as a part of an inner wall of the central tube 110 and extends into the inner cavity of the central tube 110 to support one end of the return member 108. The opposite end of the return member 108 engages with the support surface 144 of the valve body 130. The return member 108 is integral with the central tube 110 such that the return member 108 is separate and distinct from the filter element 112. Accordingly, when replacing the filter element 112, the return member 108 remains with the central tube 110 and is reused with a new filter element.

The valve body 130 includes a pressure area 148 in contact with fluid acting on the top side of the valve body 130 to move the valve body 130 toward an open position. The pressure area 148 extends outward from and substantially perpendicular to longitudinal axis 150 along a diameter corresponding to that of the aperture 106 of the first endcap 116. Fluid pressing on the valve body 130 acts on the pressure area 148 in a downward direction substantially parallel with the longitudinal axis 150. The amount of pressure to overcome the return force of the return member 108 is approximately 10 bar (1 Megapascal (MPa)). It other embodiments, the pressure to overcome the return member 108 and unseat the valve body 130 from the valve seat 117 may be more or less than 10 bar. In this regard, a significant amount of pressure may be required to overcome the return member 108 and move the valve body 130 into an open position. It may be desirable to allow a small amount of fluid to be released through the valve body 130 without requiring such a pressure to build up on the pressure area 148 of the valve body 130.

As shown in FIGS. 3 and 4, to allow a permanent leak of air from the outer cavity 127 to the inner cavity 125, the valve body 130 includes a vent passage 132 extending therethrough. The vent passage 132 extends longitudinally through the valve body 130. The vent passage 132 provides a permanent air passage from the outer cavity 127 to the inner cavity 125 without the need for the valve body 130 to move out of the closed position. The vent passage 132 is sized such that air may pass through when an air pocket is present within the filter housing 102, but also not allow a significant amount of fluid to pass therethrough to affect the operation of the filter assembly 100. The diameter of the vent passage 132 is sized in the range of 0.1 millimeter (mm) to 0.3 mm. In other embodiments, the diameter of the vent passage 132 may be more or less than this range.

Referring to FIG. 3, the valve body 130 is shown in an open position. As shown by arrows 165, fluid moves through the aperture 106 between the valve seat 117 and the valve body 130 as it passes from the outer cavity 127 into the inner cavity 125 and, ultimately, into the return line 120 shown in FIG. 1.

Referring to FIG. 4, the valve body 130 is shown in a closed position. As shown by arrow 170, the vent passage 132 allows fluid to "leak" from the outer cavity 127 to the inner cavity 125 (and through the return line 120 back to the fuel tank). By providing a permanent vent passage in the valve body 130, air that may be trapped in the filter housing 102 can move through the vent passage 132 and back to the fuel tank without first needing to move the valve body 130 into the open position.

Although the above-described filter assembly is described as being a fuel filter assembly, the same safety valve and/or valve body arrangement may be applied in other filter assemblies. For example, the same valve body arrangement may be utilized in hydraulic fluid filtering systems, lubricant filtering systems, water filtering systems, and the like.

It should be noted that any use of the term "example" herein to describe various embodiments is intended to indicate that such embodiments are possible examples, representations, and/or illustrations of possible embodiments (and such term is not intended to connote that such embodiments are necessarily extraordinary or superlative examples).

As utilized herein, the term "substantially" and similar terms are intended to have a broad meaning in harmony with the common and accepted usage by those of ordinary skill in the art to which the subject matter of this disclosure pertains, It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed (e.g., within plus or minus five percent of a given angle or other value) are considered to be within the scope of the invention as recited in the appended claims. The term "approximately" when used with respect to values means plus or minus five percent of the associated value.

The terms "coupled" and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

References herein to the positions of elements (e.g., "top," "bottom," "above," "below," etc.) are merely used to describe the orientation of various elements in the figures. It should be noted that the orientation of various elements may differ according to other example embodiments, and that such variations are intended to be encompassed by the present disclosure.

It is important to note that the construction and arrangement of the various example embodiments are illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. For example, elements shown as integrally formed may be constructed of multiple parts or elements, the position of elements may be reversed or otherwise varied, and the nature or number of discrete elements or positions may be altered or varied. The order or sequence of any process or method steps may be varied or re-sequenced according to alternative embodiments. Additionally, features from particular embodiments may be combined with features from other embodiments as would be understood by one of ordinary skill in the art. Other substitutions, modifications, changes and omissions may also be made in the design, operating conditions and arrangement of the various example embodiments without departing from the scope of the present invention.

## Claims

1. A filter assembly (100) comprising:
a housing (102) defining an outer cavity (127) and an inner cavity (125);
a filter element (112) positioned within the housing, the filter element comprising a filter media (114) and an endcap (116), the filter media configured to filter a fluid, the endcap comprising a valve seat (117); and
a valve body (130) comprising a vent passage (132), at least a portion of the valve body positioned within a central tube (110) and configured to move between a closed position and an open position, the valve body biased toward the closed position by a return member (108), the valve body further comprising an upper portion comprising one or more protruding elements (140) extending from the valve body away from the filter element, and a seating surface (160) extending around the base of the protruding elements and providing a circular seating surface engageable with the valve seat;
wherein the endcap and the valve body divide the inner cavity from the outer cavity; and
wherein in the closed position, the seating surface seals against the valve seat and the vent passage provides fluid communication between the inner cavity and the outer cavity.

2. The filter assembly of claim 1, wherein in the open position, fluid flows from the outer cavity to the inner cavity between the valve seat and an outer surface of the valve body.

3. The filter assembly of claim 1 or claim 2, wherein the filter element and the valve body are removable and replaceable from the housing as a singular filter cartridge.

4. The filter assembly of any preceding claim, wherein a sealing feature (154) is positioned between the central tube and an underside of the endcap.

5. The filter assembly of any preceding claim, wherein the endcap comprises a inner rim defining an aperture therethrough, the inner rim defining the valve seat.

6. The filter assembly of any preceding claim, wherein the inner cavity is defined by an underside of the end cap, an underside of the valve body, and an inner surface of the central tube.

7. The filter assembly of claim 6, wherein the outer cavity is defined by a top surface of the endcap and an inner wall of the filter housing.

8. The filter assembly of any preceding claim, wherein each of the one or more protruding elements comprise a tab (146) extending radially outwards from an end thereof located distal from the filter element, an underside of each of the tabs structured to abut a top surface of the endcap in the open position to limit movement of the valve body.

9. The filter assembly of any preceding claim, wherein the central tube comprises a return line (120) configured to allow fluid communication between a cavity (115) of the filter housing within which the filter element is positioned and a fuel storage location.

10. The filter assembly of any preceding claim, further comprising a retaining feature (164) formed by part of an inner wall of the central tube and extending into an inner cavity (125) of the central tube to support one end of the return member.

11. A filter element (112) for positioning in a filter housing (102) comprising:
a filter media (114);
an endcap (116) comprising a valve seat (117); and
a valve body (130) comprising a vent passage (132), the valve body configured to move between a closed position and an open position, the valve body biased toward the closed position by a return member (108), the valve body further comprising an upper portion comprising one or more protruding elements (140) extending from the valve body away from the filter element, and a seating surface (160) extending around the base of the protruding elements and providing a circular seating surface engageable with the valve seat,
wherein in the closed position, the valve body is configured to seal against the valve seat and the vent passage allows fluid flow through the valve body.

12. The filter element of claim 11, wherein the endcap comprises a inner rim defining an aperture therethrough, the inner rim defining the valve seat;
and/or wherein each of the one or more protruding elements comprises a tab (146) extending radially outwards from an end thereof distal from the filter element, an underside of each of the tabs structured to abut a top surface of the endcap in the open position to limit movement of the valve body.

## Patentansprüche

1. Filteraufbau (100), umfassend:
ein Gehäuse (102), das einen äußeren Hohlraum (127) und einen inneren Hohlraum (125) definiert;
ein Filterelement (112), das innerhalb des Gehäuses positioniert ist, wobei das Filterelement ein Filtermedium (114) und eine Endkappe (116) umfasst, wobei das Filtermedium dafür konfiguriert ist, ein Fluid zu filtern, wobei die Endkappe einen Ventilsitz (117) umfasst; und
einen Ventilkörper (130), umfassend einen Lüftungsdurchgang (132), wobei mindestens ein Abschnitt des Ventilkörpers innerhalb eines mittleren Rohrs (110) positioniert und dafür konfiguriert ist, sich zwischen einer geschlossenen Position und einer offenen Position zu bewegen, wobei der Ventilkörper durch ein Rückführelement (108) zu der geschlossenen Position hin vorgespannt ist, wobei der Ventilkörper ferner einen oberen Abschnitt, der ein oder mehr vorstehende Elemente (140) umfasst, die sich von dem Ventilkörper weg von dem Filterelement erstrecken, und eine Sitzfläche (160) umfasst, die sich um die Basis der vorstehenden Elemente erstreckt und eine kreisförmige Sitzfläche bereitstellt, die mit dem Ventilsitz in Eingriff gebracht werden kann;
wobei die Endkappe und der Ventilkörper den inneren Hohlraum von dem äußeren Hohlraum trennt; und
wobei die Sitzfläche in der geschlossenen Position gegen den Ventilsitz abdichtet und der Lüftungsdurchgang eine Fluidverbindung zwischen dem inneren Hohlraum und dem äußeren Hohlraum bereitstellt.

2. Filteraufbau nach Anspruch 1, wobei in der offenen Position Fluid von dem äußeren Hohlraum zu dem inneren Hohlraum zwischen dem Ventilsitz und einer Außenfläche des Ventilkörpers strömt.

3. Filteraufbau nach Anspruch 1 oder Anspruch 2, wobei das Filterelement und der Ventilkörper aus dem Gehäuse als einzelne Filterpatrone herausnehmbar und austauschbar sind.

4. Filteraufbau nach einem der vorhergehenden Ansprüche, wobei ein Dichtungsmerkmal (154) zwischen dem mittleren Rohr und einer Unterseite der Endkappe positioniert ist.

5. Filteraufbau nach einem der vorhergehenden Ansprüche, wobei die Endkappe einen Innenkranz umfasst, der eine Öffnung durch diese hindurch definiert, wobei der Innenkranz den Ventilsitz definiert.

6. Filteraufbau nach einem der vorhergehenden Ansprüche, wobei der innere Hohlraum durch eine Unterseite der Endkappe, eine Unterseite des Ventilkörpers und eine Innenfläche des mittleren Rohrs definiert ist.

7. Filteraufbau nach Anspruch 6, wobei der äußere Hohlraum durch eine obere Oberfläche der Endkappe und eine Innenwand des Filtergehäuses definiert ist.

8. Filteraufbau nach einem der vorhergehenden Ansprüche, wobei jedes von dem einen oder mehreren vorstehenden Elementen eine Lasche (146) umfasst, die sich von einem Ende von diesen, das distal von dem Filterelement liegt, radial nach außen erstreckt, wobei eine Unterseite von jeder der Laschen so strukturiert ist, dass sie in der offenen Position an einer oberen Oberfläche der Endkappe anliegt, um die Bewegung des Ventilkörpers zu begrenzen.

9. Filteraufbau nach einem der vorhergehenden Ansprüche, wobei das mittlere Rohr eine Rückführleitung (120) umfasst, die dafür konfiguriert ist, eine Fluidverbindung zwischen einem Hohlraum (115) des Filtergehäuses, innerhalb dem das Filterelement positioniert ist, und einem Kraftstoffspeicherort zuzulassen.

10. Filteraufbau nach einem der vorhergehenden Ansprüche, ferner umfassend ein Haltemerkmal (164), das durch einen Teil einer Innenwand des mittleren Rohrs gebildet ist und sich in einen inneren Hohlraum (125) des mittleren Rohres erstreckt, um ein Ende des Rückführelements zu stützen.

11. Filterelement (112) zur Positionierung in einem Filtergehäuse (102), umfassend:
ein Filtermedium (114);
eine Endkappe (116), umfassend einen Ventilsitz (117); und
einen Ventilkörper (130), umfassend einen Lüftungsdurchgang (132), wobei der Ventilkörper dafür konfiguriert ist, sich zwischen einer geschlossenen Position und einer offenen Position zu bewegen, wobei der Ventilkörper durch ein Rückführelement (108) zu der geschlossenen Position hin vorgespannt ist, wobei der Ventilkörper ferner einen oberen Abschnitt, der ein oder mehr vorstehende Elemente (140) umfasst, die sich von dem Ventilkörper weg von dem Filterelement erstrecken, und eine Sitzfläche (160) umfasst, die sich um die Basis der vorstehenden Elemente erstreckt und eine kreisförmige Sitzfläche bereitstellt, die mit dem Ventilsitz in Eingriff gebracht werden kann,
wobei der Ventilkörper in der geschlossenen Position dafür konfiguriert ist, gegen den Ventilsitz abzudichten und der Lüftungsdurchgang eine Fluidströmung durch den Ventilkörper zulässt.

12. Filterelement nach Anspruch 11, wobei die Endkappe einen Innenkranz umfasst, der eine Öffnung durch diesen hindurch definiert, wobei der Innenkranz den Ventilsitz definiert;
und/oder wobei jedes von dem einen oder mehreren vorstehenden Elementen eine Lasche (146) umfasst, die sich von einem Ende von diesen, das distal von dem Filterelement liegt, radial nach außen erstreckt, wobei eine Unterseite von jeder der Laschen so strukturiert ist, dass sie in der offenen Position an einer oberen Oberfläche der Endkappe anliegt, um die Bewegung des Ventilkörpers zu begrenzen.

## Revendications

1. Ensemble filtrant (100) comprenant :
un boîtier (102) définissant une cavité extérieure (127) et une cavité intérieure (125),
un élément filtrant (112) positionné à l'intérieur du boîtier, l'élément filtrant comprenant un milieu filtrant (114) et un capuchon d'extrémité (116), le milieu filtrant étant configuré pour filtrer un fluide, le capuchon d'extrémité comprenant un siège de soupape (117), et
un corps de soupape (130) comprenant un passage d'évent (132), au moins une partie du corps de soupape étant positionnée à l'intérieur d'un tuyau central (110) et configurée pour se déplacer entre une position fermée et une position ouverte, le corps de soupape étant sollicité vers la position fermée par un élément de rappel (108), le corps de soupape comprenant en outre une partie supérieure comprenant un ou plusieurs éléments saillants (140) s'étendant à partir du corps de soupape à distance de l'élément filtrant, et une surface d'assise (160) s'étendant autour de la base des éléments saillants et fournissant une surface circulaire d'assise pouvant être engagée avec le siège de soupape,
dans lequel le capuchon d'extrémité et le corps de soupape séparent la cavité intérieure de la cavité extérieure, et
dans lequel, dans la position fermée, la surface d'assise assure l'étanchéité contre le siège de soupape et le passage d'évent fournit une communication de fluide entre la cavité intérieure et la cavité extérieure.

2. Ensemble filtrant selon la revendication 1, dans lequel, dans la position ouverte, un fluide s'écoule de la cavité extérieure vers la cavité intérieure entre le siège de soupape et une surface extérieure du corps de soupape.

3. Ensemble filtrant selon la revendication 1 ou 2, dans lequel l'élément filtrant et le corps de soupape peuvent être enlevés et remplacés du boîtier sous forme d'une cartouche de filtre unique.

4. Ensemble filtrant selon l'une quelconque des revendications précédentes, dans lequel un dispositif d'étanchéité (154) est positionné entre le tuyau central et un côté inférieur du capuchon d'extrémité.

5. Ensemble filtrant selon l'une quelconque des revendications précédentes, dans lequel le capuchon d'extrémité définit une lèvre intérieure définissant une ouverture à travers celle-ci, la lèvre intérieure définissant le siège de soupape.

6. Ensemble filtrant selon l'une quelconque des revendications précédentes, dans lequel la cavité intérieure est définie par un côté inférieur du capuchon d'extrémité, un côté inférieur du corps de soupape et une surface intérieure du tuyau central.

7. Ensemble filtrant selon la revendication 6, dans lequel la cavité extérieure est définie par une surface supérieure du capuchon d'extrémité et une paroi intérieure du boîtier de filtre.

8. Ensemble filtrant selon l'une quelconque des revendications précédentes, dans lequel chacun des un ou plusieurs éléments saillants comprend une patte (146) s'étendant radialement vers l'extérieur à partir d'une extrémité de celui-ci située de façon distale par rapport à l'élément filtrant, un côté inférieur de chacune des pattes étant structuré pour venir en butée contre une surface supérieure du capuchon d'extrémité dans la position ouverte pour limiter un mouvement du corps de soupape.

9. Ensemble filtrant selon l'une quelconque des revendications précédentes, dans lequel le tuyau central comprend une ligne de retour (120) configurée pour permettre une communication de fluide entre une cavité (115) du boîtier de filtre à l'intérieur de laquelle l'élément filtrant est positionné et un emplacement de stockage de carburant.

10. Ensemble filtrant selon l'une quelconque des revendications précédentes, comprenant en outre un dispositif de retenue (164) formé par une partie d'une paroi intérieure du tuyau central et s'étendant dans une cavité intérieure (125) du tuyau central pour supporter une extrémité de l'élément de rappel.

11. Élément filtrant (112) à positionner dans un boîtier de filtre (102), comprenant :
un milieu filtrant (114),
un capuchon d'extrémité (116) comprenant un siège de soupape (117), et
un corps de soupape (130) comprenant un passage d'évent (132), le corps de soupape étant configuré pour se déplacer entre une position fermée et une position ouverte, le corps de soupape étant sollicité vers la position fermée par un élément de rappel (108), le corps de soupape comprenant en outre une partie supérieure comprenant un ou plusieurs éléments saillants (140) s'étendant depuis le corps de soupape à l'écart de l'élément filtrant, et une surface d'assise (160) s'étendant autour de la base des éléments saillants et fournissant une surface circulaire d'assise pouvant être mise en prise avec le siège de soupape,
dans lequel, dans la position fermée, le corps de soupape est configuré pour assurer l'étanchéité contre le siège de soupape et le passage d'évent permet un écoulement de fluide à travers le corps de soupape.

12. Élément filtrant selon la revendication 11, dans lequel le capuchon d'extrémité comprend une lèvre intérieure définissant une ouverture à travers celle-ci, la lèvre intérieure définissant le siège de soupape,
et/ou dans lequel chacun des un ou plusieurs éléments saillants comprend une patte (146) s'étendant radialement vers l'extérieur à partir d'une extrémité de celui-ci distale par rapport à l'élément filtrant, un côté inférieur de chacune des pattes étant structuré pour venir en butée contre une surface supérieure du capuchon d'extrémité dans la position ouverte pour limiter le mouvement du corps de soupape.
